Europäisches Patentamt

European Patent Office

Office européen des brevets

(11) Numéro de publication: **0 254 634 B1**

# (12) FASCICULE DE BREVET EUROPEEN

(45) Date de publication de fascicule du brevet:
**06.11.91**

(51) Int. Cl.⁵: **G01S 17/06, G01S 17/42**

(21) Numéro de dépôt: **87401683.5**

(22) Date de dépôt: **17.07.87**

(54) **Procédé et dispositif de mesure de distance par voie optique.**

(30) Priorité: **22.07.86 FR 8610621**

(43) Date de publication de la demande:
**27.01.88 Bulletin 88/04**

(45) Mention de la délivrance du brevet:
**06.11.91 Bulletin 91/45**

(84) Etats contractants désignés:
**AT BE DE GB IT NL SE**

(56) Documents cités:
**GB-A- 2 126 041**
**GB-A- 2 139 036**
**US-A- 4 221 973**

**PATENT ABSTRACTS OF JAPAN, vol. 7, no.
176 (P-214)[1321], 4 août 1983; & JP-A-58 79
179 (MITSUBISHI DENKI K.K.) 12-05-1983**

(73) Titulaire: **MATRA ESPACE**
**4, rue de Presbourg**
**F-75116 Paris(FR)**

(72) Inventeur: **Bomer, Thierry**
**29 Rue Saint-Amand**
**F-75015 Paris(FR)**

(74) Mandataire: **Fort, Jacques**
**CABINET PLASSERAUD 84, rue d'Amsterdam**
**F-75009 Paris(FR)**

EP 0 254 634 B1

## Description

L'invention concerne la mesure de distance entre une installation active, qu'on appellera ci-après "chasseur" et un organe passif dans la mesure, qu'on appellera ci-après "cible". Elle trouve une application particulièrement importante, bien que non exclusive, dans le domaine de la mesure de la distance et de la position de la cible par rapport au chasseur, notamment pour permettre le rendez-vous et l'accostage de deux véhicules spatiaux.

Dans ce dernier cas, il est nécessaire que le chasseur soit muni d'un dispositif permettant :

- de mesurer la distance de la cible et sa position par rapport au chasseur, dès que l'écartement est inférieur à 100 km environ.
- déterminer également l'attitude de la cible, mais uniquement pour des distances beaucoup plus courtes, ne dépassant pas quelques dizaines de mètres.

On a déjà proposé d'utiliser dans ce but des dispositifs de mesure comportant, sur la cible, plusieurs réflecteurs répartis suivant un motif géométrique déterminé et, sur le chasseur, une source impulsionnelle de lumière monochromatique et un détecteur matriciel de formation de l'image des réflecteurs. Le détecteur est généralement constitué par une matrice de capteurs à couplage de charges ou CCD. La détermination de l'attitude de la cible par rapport au chasseur s'effectue alors par comparaison de l'image obtenue à courte distance avec le motif connu de répartition des réflecteurs. A courte distance, il est également possible de mesurer l'écartement entre le chasseur et la cible par analyse de l'image. Mais, dès que les distance devient importante, elle ne peut plus être déterminée par mesure de la taille de la cible car cette image est pratiquement ponctuelle pour le détecteur. Dans ce cas, on sait déjà déterminer la distance par mesure du temps de vol d'une impulsion fournie par la source lumineuse. Le temps de vol est en effet égal à deux fois la distance divisée par la vitesse de la luminère.

Mais, dès que les distances sont importantes, la puissance qui revient au chasseur est très faible et on se heurte au problème de l'identification de l'écho dans l'image, où apparaissent des parasites dûs aux sources situées dans le champ, notamment lorsque le Soleil s'y trouve.

Ce problème est d'autant plus grave que le mode classique d'utilisation des CCD comporte une phase d'intégration des charges générées dans chacun des capteurs par les photons incidents. Les sources permanentes, comme le Soleil, créent des charges pendant toute la durée de la phase d'intégration, très supérieure à la durée des impulsions envoyées par la source.

On a déjà proposé de résoudre ce problème en interposant, sur le trajet de retour de l'écho lumineux vers le CCD, un obturateur mécanique ou opto-électronique présentant une durée d'ouverture à peu près égale à la durée de l'impulsion fournie par la source. On cherche, par modification du retard de l'ouverture de l'obturateur par rapport à l'émission de l'impulsion, l'instant où l'on obtient un signal de sortie maximum. Du retard, qui correspond au temps de vol, on peut déduire la distance.

Cette solution est peu satisfaisante. L'obturateur mécanique ou opto-électronique est coûteux. Sa mise en oeuvre est complexe. La mesure implique des tâtonnements pour réaliser la coïncidence entre l'instant de retour de l'impulsion et l'ouverture de la fenêtre, c'est-à-dire la synchronisation.

L'invention vise à fournir un procédé et un dispositif de mesure répondant mieux que ceux antérieurement connus aux exigences de la pratique, notamment en ce qu'elle permet d'effectuer les mesures de distance sans adjonction d'organe mécanique ou électromécanique aux moyens qui sont de toute façon nécessaires pour effectuer une mesure de position et/ou d'attitude.

Dans ce but, l'invention propose notamment un procédé de mesure optique de distance entre un chasseur et une cible, suivant la revendication 1 et un dispositif selon la revendication 2.

L'invention sera mieux comprise à la lecture de la description qui suit d'un mode particulier de réalisation, donné à titre d'exemple non limitatif, utilisant comme détecteur un CCD à transfert de trame d'un type déjà utilisé pour des mesures de position et d'attitude à courte distance entre véhicules spatiaux. La description se réfère aux dessins qui l'accompagnent, dans lesquels :

- la Figure 1 est un schéma de principe montrant les mesures de distance et de position à effectuer en vue d'un rendez-vous dans l'espace ;
- la Figure 2 est un schéma de principe montrant la constitution d'un CCD à transfert de trame ;
- la Figure 3 montre, de gauche à droite, les transferts successifs subis par les pixels d'une colonne du CCD (les carrés hachurés désignant les pels ou pixels qui ne donnent pas lieu à lecture par le registre de sortie) ;
- la Figure 4 montre l'échelonnement dans le temps d'une impulsion d'éclairage, du début du transfert de trame et de l'instant de retour d'écho ;
- la Figure 5 est un schéma montrant la différence de position de l'image apparente en fonction de l'instant de retour de l'écho par rapport à la séquence de transfert ;
- les Figures 6 et 6A sont respectivement un schéma d'ensemble et un schéma fonctionnel d'un dispositif utilisant un CCD à transfert de trame ;

- la Figure 7 est un synoptique du séquenceur du dispositif de la Figure 6A ;
- la Figure 8 est un chronogramme des signaux qui apparaissent dans le synoptique de la Figure 6 ;
- la Figure 9 montre un CCD à transfert interligne permettant également de mettre en oeuvre l'invention ;
- la Figure 10 montre schématiquement l'utilisation d'une barrette linéaire de CCD pour constituer un dispositif de mesure de distance (ne permettant pas de fournir la position de la cible en azimut).

On décrira l'invention dans son application à la mesure de la distance et de la position d'une cible 10 par rapport à un chasseur 12, constitués l'un et l'autre par des véhicules spatiaux. Le dispositif porté par le chasseur 12 doit permettre de déterminer la distance D et les angles $\alpha$ and $\beta$ qui définissent l'orientation de la cible par rapport à un axe principal du chasseur 12 (tangente à la trajectoire par exemple). Lorsque le dispositif de mesure porté par le chasseur doit également déterminer l'attitude de la cible 10, cette dernière porte plusieurs rétroréflecteurs (non représentés) répartis suivant un motif reconnaissable par le dispositif.

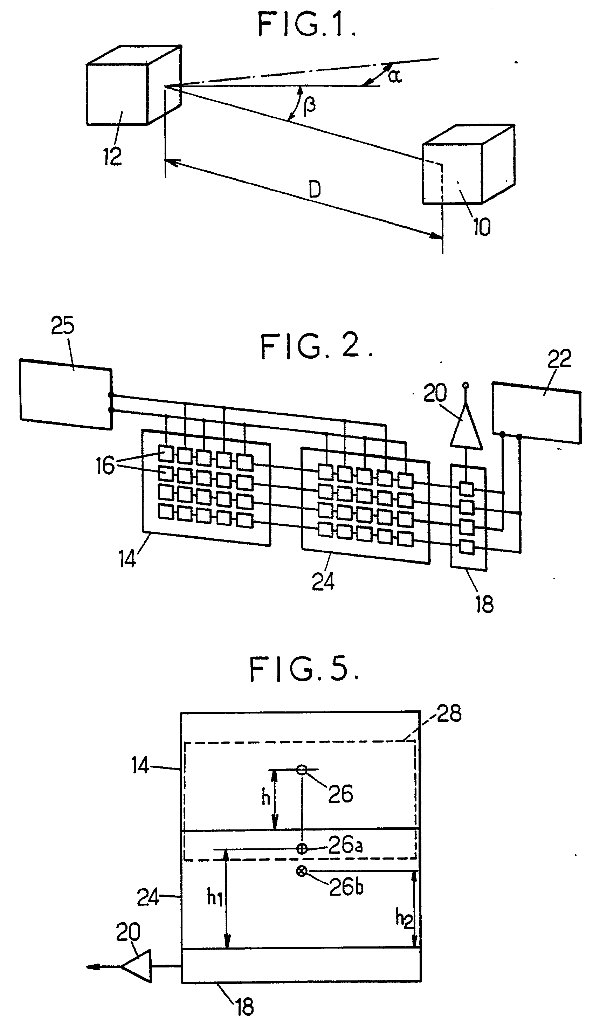

On connaît déjà des dispositifs de mesure comportant, sur le chasseur 12, une source impulsionnelle monochromatique (généralement une ou plusieurs diodes laser) et un détecteur à état solide comportant une matrice de capteurs. Ce détecteur est généralement du type à couplage de charges ou CCD, ayant la constitution montrée en Figure 2.

Pour faire apparaître les avantages apportés par l'invention, il convient tout d'abord de rappeler la constitution et le mode de fonctionnement classique d'un CCD. L'élément photosensible 14 du CCD, dit zone image, est constitué par une plaquette de matériau semiconducteur portant un réseau matriciel à deux dimensions constitué d'un grand nombre de sites photosensibles 16, groupés en lignes et colonnes. Chaque site photosensible 16 constitue un puits de potentiel qui piège les électrons générés par interaction des photons incidents qu'il reçoit. Lors de la mise en oeuvre classique d'un CCD, les paquets d'électrons sont piégés dans un puits de potentiel pendant une durée constante, appelée temps d'intégration, puis transférés à un registre de sortie 18 d'où ils sont transformés séquentiellement en une tension analogique par un préamplificateur 20 fonctionnant à fréquence vidéo. Une horloge assure ce transfert qui intervient pixel par pixel dans une même ligne, sous la commande d'une horloge 22.

On voit que les sites photosensibles constituent également des registres à décalage. Mais, comme ces registres de la zone image 14 sont photosensibles, on a estimé jusqu'ici que le nombre d'électrons générés pendant la phase de lecture doit être négligeable devant le nombre de ceux générés pendant la phase d'intégration, afin de ne pas perturber l'image. Or, l'étage de lecture, comportant le registre de sortie 18, est lent car il a un très grand nombre de pixels à lire.

Pour cette raison, on interpose, dans les CCD dits à transfert de trame, une zone de mémoire 24 entre la zone image 14 et le registre de sortie 18. La zone de mémoire est contitué d'éléments répartis suivant une matrice identique à celle de la zone image, mais non photosensibles. Chacun des éléments de la zone de mémoire sauvegarde le paquet d'électrons créés dans le site photosensible correspondant de la zone image 14, sans perturbations. Le transfert du contenu de la zone image 14 dans la zone de mémoire 24 s'effectue à une cadence fixée par une horloge 25 de transfert de ligne.

Le CCD montré en Figure 2 est trop lent pour permettre là mesure du temps de vol d'une impulsion lumineuse avec une bonne résolution : il doit en conséquence être associé à un dispositif de mesure de distance, constitué par exemple par un obturateur mécanique ou opto-électronique et une chaîne de mesure. Au surplus, la fraction de lumière incidente qui revient au chasseur est très faible. Pour pouvoir distinguer l'écho, il faut une source de luminère très puissante qui ne peut pratiquement être qu'une source pulsée. Mais la possibilité de réaliser un temps d'intégration très court sur la zone image 14 d'un CCD rend encore nécessaire l'adjonction de l'obturateur qui représente un composant coûteux et, de plus, ne fournit une mesure qu'à l'issue d'une période de recherche en distance.

A titre d'exemple, on peut indiquer qu'on dispose à l'heure actuelle de CCD dont la zone image 14 comporte des sites photosensibles répartis suivant une matrice de 384 colonnes et 290 lignes. La zone mémoire 24 comporte le même nombre de composants.

Classiquement, la séquence des opérations lors de la mise en oeuvre dans un CCD du genre montré en Figure 2 est la suivante :

- déchargement de la zone image 14 par transfert des paquets d'électrons d'une ligne à l'autre et de la dernière ligne de la zone image à la première ligne de la zone mémoire 24, à une vitesse qui peut être de 1 Mligne par seconde ;
- phase d'intégration, au cours de laquelle les charges générées dans la zone image par les photons incidents sont cumulées, la sensibilité du détecteur dépendant de la durée de cette phase (pouvant en général aller de 1 ms à quelques secondes) ;

- transfert des charges accumulées dans la zone image 14 à la zone mémoire 24, par décalage des lignes, provoqué par 290 impulsions successives de transfert fournies par l'horloge 25 ;
- lecture de la zone de mémoire 24, par décalage d'une ligne dans le registre de sortie 18, puis décalage de ce registre, à une vitesse qui peut être de 1 Mpixel, soit 2,5 Klignes, par seconde.

Si on utilise cette disposition, on voit que, lors les phases de déchargement de la zone mémoire 24 et de transfert vers la zone mémoire, les électrons qui continuent à être générés dans les sites photosensibles de la zone image 14 se trouvent à un emplacement différent de celui qu'ils auraient dans l'image formée au cours de la phase d'intégration. Pour éviter qu'ils ne perturbent les mesures, il faut, dans le mode d'exploitation classique d'un CCD, que la phase d'intégration ait une durée très supérieure à la durée des phases de déchargement et de transfert.

L'invention utilise un procédé que l'on peut considérer comme totalement opposé, consistant à supprimer la phase d'intégration, ou du moins à la réduire à la durée du temps de transfert d'une ligne. L'image fournie par la zone de mémoire 24 est alors constituée de colonnes dans lesquelles chaque pixel représente la somme des charges élémentaires accumulées chacune pendant la durée de l'impulsion de transfert fournie par l'horloge 25 pour une position dans la colonne correspondante, lors du parcours de la zone image 14.

Si la scène à observer a un éclairement constant dans le temps, tous les pixels d'une même colonne auront reçu le même nombre de photons et ils auront tous le même niveau. Si la scène n'a pas un éclairement homogène, l'image sera constituée par des raies dont les niveaux correspondent à l'éclairement moyen des colonnes.

Si au contraire l'un des sites photodétecteurs de la zone image 14 reçoit une impulsion brève, de durée inférieure à celle des impulsions de transfert, les charges ne sont générées sur ce site que pendant la durée de l'impulsion ; étant donné qu'il n'y a pas de transfert pendant cet intervalle de temps, l'image sera nette.

Grâce à ce mode de mise en oeuvre, il est possible :

- d'écarter les éclairements parasites, par exemple par soustraction des signaux correspondant à deux pixels successifs d'une même colonne ;
- du fait que le détecteur est maintenant très rapide, de mesurer le temps de vol de l'impulsion lumineuse, qui se traduit par un décalage de la représentation de l'écho sur l'image par rapport à la représentation que l'on aurait en cas d'exploitation suivant le mode traditionnel.

Comme par ailleurs il n'y a pas eu de modification de l'emplacement dans le sens des lignes, le nouveau mode de mise en oeuvre n'empêche nullement d'effectuer des mesures dans le sens de balayage, c'est-à-dire de déterminer par exemple l'angle $\alpha$ de la Figure 1. Quant à l'angle $\beta$, il peut être déterminé en effectuant deux mesures successives avec des fréquences de transfert différentes.

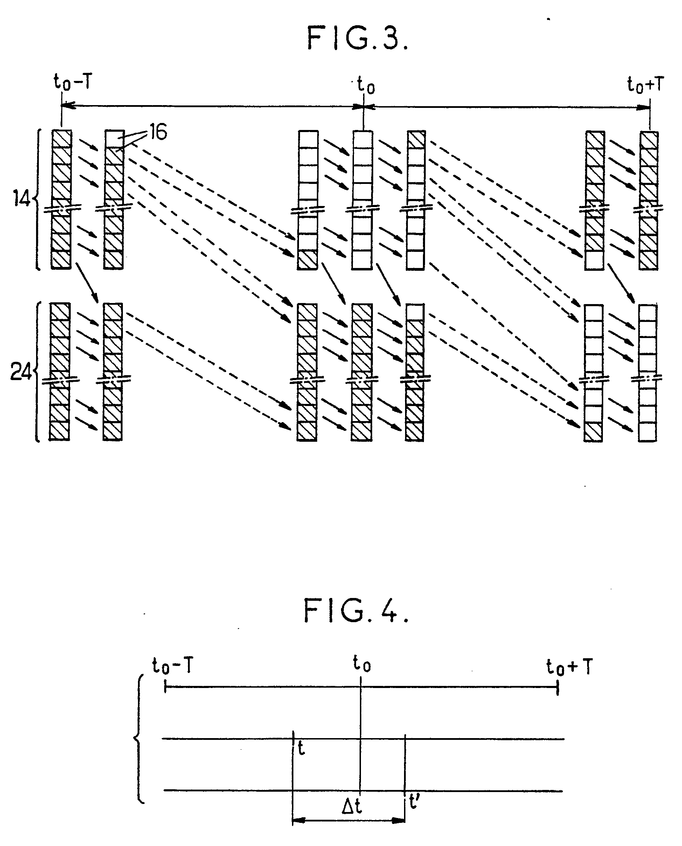

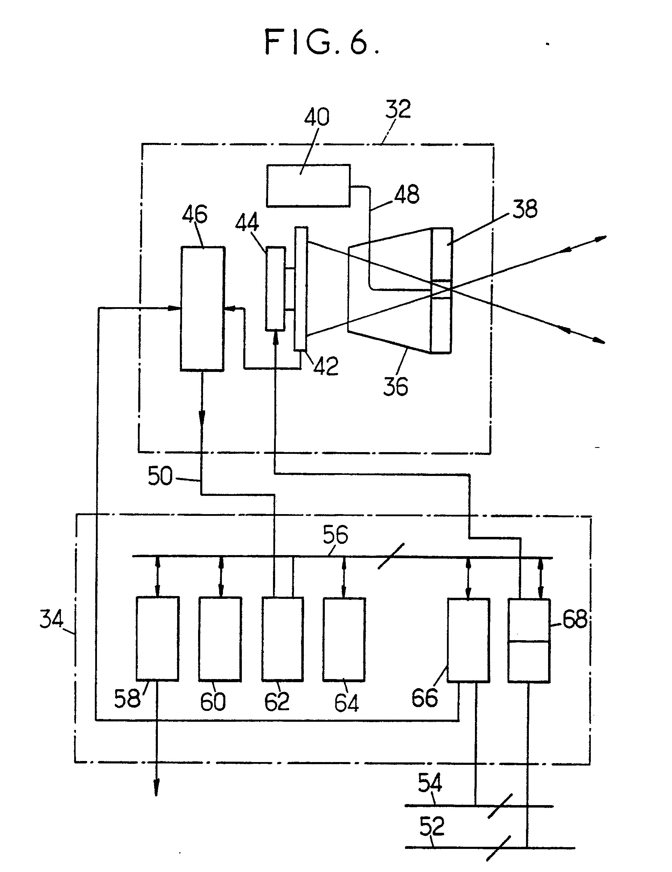

La Figure 3 montre l'échelonnement des transferts par rapport à l'instant t de l'impulsion fournie par la sourse du chasseur 12. La durée T est celle nécessaire aux transferts successifs de 290 lignes, fixée par fréquence de l'horloge 25. Si l'on suppose que l'image de l'écho se forme sur le site photosensible 26 situé au milieu de la zone image 14 (Figure 5), du fait que l'écho revient sur le CCD alors que le transfert a déjà amené cette zone image en 28, la représentation apparaît en 26a à la lecture. Si l'on désigne par $t_0$, t et t' les instants de fin du premier transfert, d'envoi de l'impulsion de l'éclairement et de retour d'écho, respectivement, et par $f_1$ et $f_2$ deux valeurs successives de fréquence de transfert, qui conduisent à des hauteurs de la représentation dans les images h1 et h2, on a :

$$h1 = h + \alpha . f_1 (t'-t_0)$$
$$h2 = h + \alpha . f_2 (t'-t_0)$$

d'où on déduit :

$$\delta t = t'-t = [(h1-h2) / \alpha(f1-f2)] + (t_0-t)$$

et :

$$h = h1-f_1 [(h1-h2) / (f_1-f_2)]$$

On voit qu'on peut ainsi déterminer, d'une part, le temps de vol, d'où se déduit la distance, d'autre part, la position de la cible dans le sens des colonnes.

La représentation de l'impulsion d'éclairement est constituée par une tache. En utilisant des techniques de recherche de barycentre d'éclairement, on peut obtenir une résolution spatiale de mesure atteignant environ 0,02 pixel. La fréquence maximum de transfert étant d'environ 1 Mligne par seconde, la résolution obtenue peut être de 0,02 $\mu$s sur le temps de vol, soit 3 mètres sur la distance.

Il est évidemment possible, en avançant ou en retardant l'instant t de l'impulsion d'éclairage par rapport à l'instant $t_0$, de créer un décalage vers le haut ou vers le bas de l'image et, donc, de ne pas réduire le champ utilisable du dispositif par rapport à celui de la zone image 14.

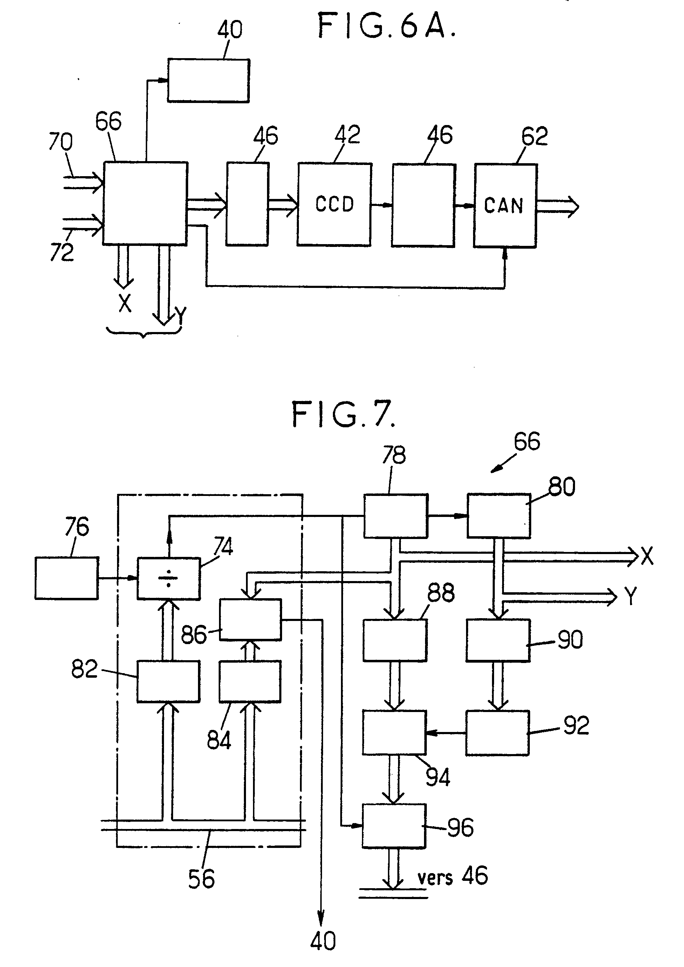

La constitution générale du dispositif de mesure peut être celle montrée schématiquement en Figure 6. Le dispositif de cette Figure comprend une tête optique 32 et une unité électronique 34. La tête 32 comporte un objectif 36 muni d'un filtre optique d'entrée 38 dont la bande passante correspond à la raie d'émission de la diode laser 40 constituant la source impulsionnelle. La tête optique contient encore le détecteur CCD 42 sur lequel se forme l'image fournie par l'objectif 36. Ce CCD est muni d'un refroidisseur Peltier 44 muni d'un circuit d'alimentation 68. La tête optique 32 contient encore un boîtier d'interface 46 recevant des signaux d'horloge de l'unité 34, comme on le verra plus loin. Un guide optique 48 permet de transmettre l'émission optique de la diode laser 40 jusqu'à l'axe de l'objectif 36. L'interface 46 permet essentiellement d'adapter les horloges et le signal video retransmis sur une ligne 50 à l'unité électronique 34.

L'unité electronique 34 est reliée, d'une part, à la tête optique 32, d'autre part, aux bus de puissance 52 et de données 54 du véhicule spatial qui porte le dispositif. Cette unité présente un bus interne 56 auquel sont reliés les différents circuits permettant d'assurer :

- le séquencement du CCD,
- le traitement analogique du signal video provenant de la tête optique,
- le traitement numérique du signal après numérisation (notamment soustraction des brillances correspondant à deux points successifs d'une même colonne),
- les commandes et calculs,
- l'alimentation des différents circuits de l'unité électronique 34 et de la tête optique 32,
- la commande et l'alimentation du refroidisseur à effet Peltier 44,
- la commande et l'alimentation de la diode laser 40.

La constitution générale de l'unité 34 peut notamment être celle montrée en Figure 6, qui comporte, raccordés au bus interne 56 :

- une mémoire d'image 58, munie d'une sortie raccordée à un émetteur-récepteur de télémesure assurant des liaisons avec le sol,
- un processeur de traitement 60,
- une chaîne 62 de traitement analogique du signal video et de conversion analogique/numérique,
- une chaîne 64 de traitement en temps réel,
- un séquenceur 66, qui sera décrit plus en détail plus loin, fournissant des signaux d'horlage à l'interface 46,
- un circuit de puissance 68 contenant un convertisseur continu-continu et assurant également la régulation de température par commande du circuit 44.

Beaucoup des composants d'un tel dispositif sont identiques à ceux que l'on trouve sur des dispositifs de mesure de distance à obturateur électro-optique. Cependant, le schéma fonctionnel est du genre montré en Figure 6A. Le séquenceur 66, en réponse à des entrées 70 et 72 représentant la fréquence de transfert à adopter et le retard à l'emission de la diode laser, fournit une impulsion de commande à la diode laser 40, des impulsions d'horloge à l'interface 46 et les adresses des pixels au fur et à mesure d'un transfert, sous forme des coordonnées X et Y dans la matrice (correspondant aux angles $\alpha$ et $\beta$ de la Figure 1).

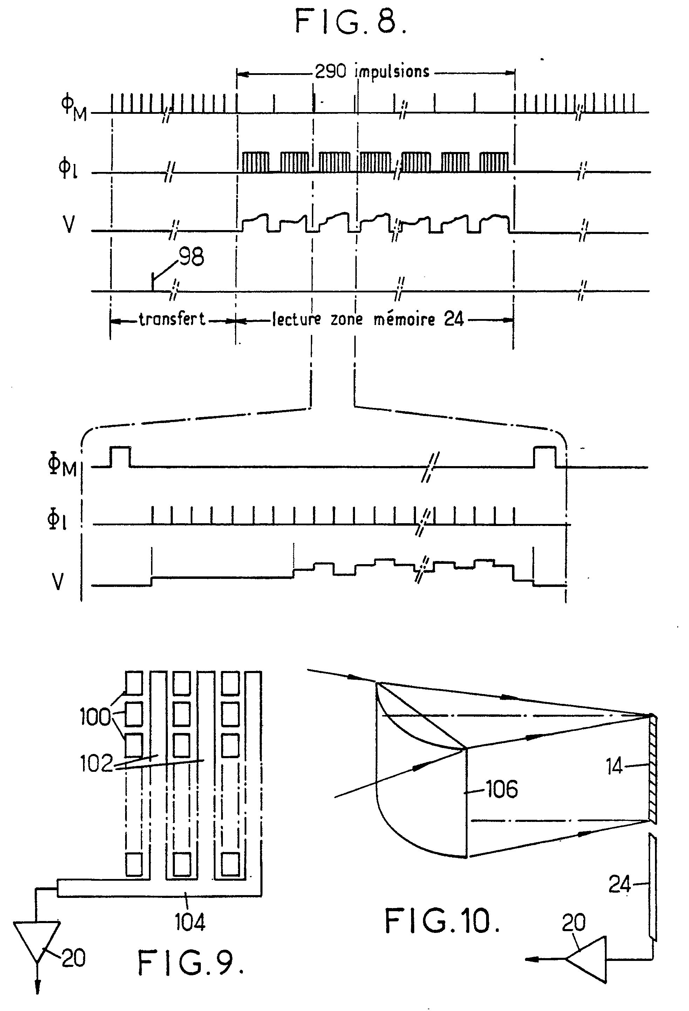

Le séquenceur peut notamment avoir la constitution montrée en Figure 7 : comparé à un séquenceur pour dispositif à viseur d'étoile, les composants supplémentaires sont ceux situés dans le cadre en trait mixte. Le séquenceur 66 comporte un diviseur programmable 74 recevant des signaux d'une horloge locale 76 et alimentant un compteur de pixels 78 en cascade avec un compteur de lignes 80. L'un et l'autre des compteurs peuvent être à neuf positions binaires et ils fournissent, sur leur sortie, les coordonnées en X et Y de chaque pixel à son tour. Le diviseur 74 est programmé par un registre 82 à partir de données fournies par le bus local 56. Ce bus permet de charger également un registre 84 de programmation du retard au déclenchement de la diode laser 40 définissant l'instant t. Le déclenchement 40 lui-même est assuré par un comparateur 86 entre le contenu du registre et la sortie du compteur de pixels 78. Les deux compteurs 78 et 80 sont associés chacun à un décodeur 88 ou 90. Le décodeur 90 attaque une logique de commande 92 qui permet de valider, c'est-à-dire de rendre passant, au réseau de portes 94 alimentant un circuit de synchronisation 96 fournissant les différents signaux de commande nécessaires au CCD.

La Figure 8 est un chronogramme des différents signaux générés. Les lignes identifiées par $\phi m$ (la ligne du bas représentant, à grande échelle, une partie de la ligne du haut) indiquent l'échelonnement dans le temps des signaux de transfert en zone mémoire. Les lignes $\phi l$ montrent les signaux de lecture en zone mémoire. Le signal video peut présenter la forme montrée par les lignes V. Les sept premières impulsions de lecture peuvent constituer une pré-lecture qui n'est pas utilisée dans l'exploitation de l'image. Enfin, les signaux fournis par les portes 94 comprennent encore une impulsion 98 de synchronisation de la diode laser. Le temps de vol dû à la distance est compensé par programmation du registre 84 à partir du bus local 56.

L'invention ne se limite pas au mode particulier de réalisation qui a été décrit ci-dessus à titre d'exemple. De nombreuses variantes sont possibles. On peut notamment utiliser, au lieu d'un CCD à transfert de trame, un CCD à transfert interligne. Dans un tel CCD, les sites photosensibles 100 sont disposés en lignes accolées chacune à un registre à décalage 102, comme cela est représenté sur la Figure 9. Tous les registres sont reliés à un registre de sortie 104 qui attaque lui-même un préamplificateur video 20. Les registres ne sont pas photosensibles et, en fonctionnement classique du CCD, tous les paquets d'électrons générés dans les sites photosensibles sont transférés en fin d'intégration dans les registres à décalage et ces derniers sont lus à travers le registre de sortie 104. On peut également adapter un tel type de registre à la mise en oeuvre de l'invention.

Enfin, quand on ne recherche pas une mesure de position de la cible dans le sens X, on peut réduire le CCD à une simple barrette comprenant une zone image 14 et une zone mémoire 24. Dans ce cas, l'optique 106 de formation d'image est prévue pour former une image linéaire.

## Revendications

1. Procédé de mesure optique de distance entre un chasseur (12) et une cible (10), suivant lequel on émet, à partir du chasseur vers la cible et de façon répétitive, des impulsions lumineuses sensiblement monochromatiques et on recueille le flux lumineux réfléchi par la cible sur une zone image d'un détecteur matriciel à lecture par transfert ligne à ligne ou point à point vers une zone mémoire, caractérisé en ce qu'on effectue le transfert, à fréquence déterminée, pendant le retour de l'écho **et en ce que** la séquence d'émission, de recueil et de transfert est répétée pour au moins deux fréquences de transfert différentes, la distance étant déduite du décalage (h1-h2) entre des lignes ou points ayant reçu, dans ladite zone mémoire, l'écho pour les deux fréquences différentes.

2. Dispositif de mesure optique de distance entre un chasseur et une cible, comprenant, sur la cible, des moyens rétroréflecteurs et, sur le chasseur, une source d'impulsions lumineuses sensiblement monochromatique, et un détecteur à état solide comportant une zone image à matrice de capteurs (16) et des moyens de lecture par transfert ligne à ligne ou point à point à fréquence déterminée vers une zone mémoire et un organe de sortie (18,20), **caractérisé par :**
   - des moyens de synchronisation (22,25 ; 84,86) pour déclencher une impulsion à un instant déterminé pour que l'écho revienne au cours du transfert par les moyens de lecture, et
   - des moyens de calcul pour déduire la distance de la mesure de la ligne ou du point qui a reçu, dans ladite zone mémoire, l'écho, pour deux fréquences de transfert différentes.

3. Dispositif selon la revendication 2, caractérisé en ce que les moyens de calcul sont prévus pour soustraire les éclairements de points adjacents d'une même colonne afin d'éliminer l'incidence de l'éclairage permanent.

4. Dispositif selon la revendication 2 ou 3, caractérisé en ce qu'il comprend des moyens de décalage de l'impulsion lumineuse par rapport au début du transfert en fonction du temps d'aller-retour pour que l'écho soit reçu au cours du transfert.

5. Dispositif selon la revendication 2, 3 ou 4, caractérisé en ce que le détecteur est constitué par un détecteur à couplage de charges comprenant une zone image (14) formée par un réseau matriciel de sites photosensibles regroupés en lignes et colonnes et une zone mémoire (24) également formée par un réseau matriciel, les moyens de lecture assurant le transfert ligne à ligne du contenu de la zone image dans la zone mémoire et de celle-ci dans un registre (48) de sortie permettant la lecture séquentielle des pixels d'une ligne.

6. Dispositif selon la revendication 5, caractérisé en ce que ladite source est constituée par une diode laser (40) fournissant l'impulsion lumineuse dans l'axe de l'optique (36) de formation de l'image réfléchie sur le détecteur.

## Claims

1. Process for optical measurement of the distance between a hunter (12) and a target (10) comprising the steps of emitting, from the hunter toward the target and repeatedly, substantially monochromatic light pulses and collecting the light flux reflected by the target on an image zone of a matrix detector which is read-out by line-per-line or point-per-point toward a memory zone,
   characterized in that the transfer is carried out, at a predetermined frequency, during the return of the echo and in that the emission, collection and transfer sequence is repeated at at least two different transfer frequencies, the distance being derived from the shift (h1-h2)

between lines or points which have received the echo, in said memory zone, for the two different frequencies.

2. Device for the optical measurement of the distance between a hunter and a target, comprising, on the target, back reflecting means and, on the hunter, a source of substantially monochromatic light pulses and a solid state detector having an image zone with a matrix of sensors (16) and means for read-out by line-per-line transfer or point-per-point transfer at a predetermined frequency toward a memory zone, and an output unit (18,20),
characterized by :
- timing means (22,25; 84,86) for triggering a pulse at a time which is determined for the echo to be returned during transfer by the read-out means, and
- computing means for deriving the distance from the determination of that line or that point which has received the echo, in said memory zone, for two different transfer frequencies.

3. Device according to claim 2,
characterized in that the computing means are arranged for subtracting the brightnesses of two adjacent points of a same column for suppressing the effect of permanent lighting.

4. Device according to claim 2 or 3,
characterized in that it comprises means for offsetting the light pulse with respect to the beginning of the transfer responsive to the back and forth time so that the echo be received during the transfer.

5. Device according to claim 2, 3 or 4,
characterized in that the detector consists of a CCD detector comprising an image zone (14) formed by a matrix network of light responsive locations distributed into lines and columns and a memory zone (24) which also is formed as a matrix network, the read-out means being for line-per-line transfer of the content of the image zone into the memory zone and from the latter into an output register (48) for sequential read-out of the pixels of a line.

6. Device according to claim 5,
characterized in that said source consists of a laser diode (40) which delivers the light pulse along the axis of the optical means (36) which forms the reflected image on the detector.

## Patentansprüche

1. Verfahren zum optischen Messen des Abstandes zwischen einem Jäger (12) und einem Ziel (10), bei welchem ausgehend vom Jäger in Richtung auf das Ziel im wesentlichen monochromatische Lichtimpulse wiederholt ausgesandt werden und der vom Ziel reflektierte Lichtstrom auf einem Abbildungsbereich eines Matrixdetektors empfangen wird, der das Bild durch zeilenweise oder punktweise Übertragung in einen Speicherbereich ausliest, dadurch gekennzeichnet, daß die Übertragung mit bestimmter Frequenz während der Rückkehr des Echos durchgeführt wird und daß die Abfolge von Aussendung, Empfang und Übertragung für zumindest zwei verschiedene Übertragungsfrequenzen wiederholt wird, wobei der Abstand aus dem Versatz (h1-h2) zwischen den Zeilen oder Punkten abgeleitet wird, die im Speicherbereich ein Echo bei den beiden verschiedenen Frequenzen empfangen haben.

2. Vorrichtung zur optischen Messung des Abstandes zwischen einem Jäger und einem Ziel, die auf dem Ziel rückstrahlende Mittel und auf dem Jäger eine Quelle von im wesentlichen monochromatischen Lichtimpulsen aufweist, und wobei ein Festkörper-Detektor einen Abbildungsbereich mit einer Matrix von Sensoren (16) und Mittel aufweist, die das Bild durch zeilenweise oder punktweise Übertragung mit bestimmter Frequenz in einen Speicherbereich oder ein Ausgangsorgan (18, 20) auslesen,
gekennzeichnet durch:
- Synchronisationsmittel (22, 25; 84, 86) zum Auslösen eines Impulses zu einem bestimmten Zeitpunkt, damit das Echo während der Übertragung durch die Auslesemittel zurückkehrt, und
- Berechnungsmittel zum Ableiten des Abstandes aus der Messung der Zeile oder des Punktes, die bzw. der im Speicherbereich ein Echo bei den beiden verschiedenen Übertragungsfrequenzen empfangen hat.

3. Vorrichtung nach Anspruch 2, dadurch gekennzeichnet, daß die Berechnungsmittel zum Subtrahieren der Belichtungen von benachbarten Punkten derselben Kolonne ausgebildet sind, um einen Permanentlichteinfall zu eliminieren.

4. Vorrichtung nach Anspruch 2 oder 3, dadurch gekennzeichnet, daß sie Mittel zum Versetzen des Lichtimpulses bezüglich des Anfangs der Übertragung in Abhängigkeit von der Hin- und Rücklaufzeit aufweist, damit das Echo während der Übertragung empfangen wird.

5. Vorrichtung nach Anspruch 2, 3 oder 4, dadurch gekennzeichnet, daß der Detektor durch einen ladungsgekoppelten Detektor gebildet ist, der einen Abbildungsbereich (14), welcher durch ein Matrixnetzwerk aus in Zeilen und Spalten angeordneten photosensiblen Stellen gebildet ist, und einen Speicherbereich (24) aufweist, der ebenfalls durch ein Matrixnetzwerk gebildet ist, wobei die Auslesemittel die zeilenweise Übertragung des Inhaltes des Abbildungsbereiches in den Speicherbereich und des letzteren in ein Ausgangsregister (18) gewährleisten, welches das sequentielle Auslesen der Pixel einer Zeile ermöglicht.

6. Vorrichtung nach Anspruch 5, dadurch gekennzeichnet, daß die Quelle durch eine Laserdiode (40) gebildet ist, die den Lichtimpuls in der Achse der Optik (36) zur Erzeugung des reflektierten Abbildes auf dem Detektor abgibt.

# FIG.1.

# FIG.2.

# FIG.5.

# FIG.3.

# FIG.4.

# FIG.6.

# FIG.6A.

# FIG.7.

vers 46

# FIG. 8.

290 impulsions

$\phi_M$

$\phi_I$

V

98

transfert — lecture zone mémoire 24

$\phi_M$

$\phi_I$

V

100

102

104

FIG. 9.

20

FIG. 10.

14

106

24

20